Europäisches Patentamt

European Patent Office

Office européen des brevets

(11) Veröffentlichungsnummer: **0 205 789 B1**

(12) **EUROPÄISCHE PATENTSCHRIFT**

(45) Veröffentlichungstag der Patentschrift: **31.07.91**

(51) Int. Cl.5: **G01L 19/04**

(21) Anmeldenummer: **86104821.3**

(22) Anmeldetag: **09.04.86**

(54) **Druck- und Temperatursensor für fluidische Systeme.**

(30) Priorität: **17.04.85 DE 3513749**

(43) Veröffentlichungstag der Anmeldung:
**30.12.86 Patentblatt 86/52**

(45) Bekanntmachung des Hinweises auf die
Patenterteilung:
**31.07.91 Patentblatt 91/31**

(84) Benannte Vertragsstaaten:
**AT BE CH DE FR GB IT LI NL SE**

(56) Entgegenhaltungen:
**DE-A- 722 063**
**DE-A- 3 000 110**
**US-A- 3 559 486**

(73) Patentinhaber: **Hydrotechnik GmbH**
**Holzheimer Strasse 94-96**
**W-6250 Limburg 1(DE)**

(72) Erfinder: **Hofmann, Manfred**
**Lahnblick 28**
**W-6251 Altendiez(DE)**

(74) Vertreter: **Linser, Heinz et al**
**Patentanwälte Heinz Linser Dipl. Ing. Eck-**
**hardt Eyer Robert-Bosch-Strasse 12a Post-**
**fach 10 22 10**
**W-6072 Dreieich(DE)**

## Beschreibung

Die Erfindung betrifft einen Sensor für fluidische Systeme zur kontinuierlichen und gleichzeitigen Erfassung von Arbeitsdrücken und Temperaturen, mit einem Sensorgehäuse zur Aufnahme einer Temperatursonde sowie eines in einer Drucksensorkammer befindlichen Drucksensors und mit im Sensorgehäuse befindlichen Bohrungen und Durchgängen zu den Sonden.

Zur Erfassung von Arbeitsdrücken oder Temperaturen der fluidischen Medien ist beispielsweise eine Meßkupplung für fluidische Systeme bekannt, welche aus einer im eingebauten Zustand unter Leitungsdruck stehenden Kupplungsbuchse besteht, in deren Bohrung ein federbelastetes und mechanisch betätigbares Rückschlagventil angeordnet ist (VDi-Z 118 (1976) Nr. 23 Seite 1133).

Meßkupplungen dieser Art dienen zum Beispiel zur Herstellung von Prüf- oder Meßanschlüssen an Druckleitungen, wobei in der Regel die Kupplungsbuchse mit ihrem Einschraubgewinde fest an der Druckleitung eines fluidischen Systems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d.h. ohne die Anlage stillzusetzen, über Meßschläuche mit den entsprechenden Meßgeräten verbunden werden. Bei Anschluß festinstallierter Geräte, zum Beispiel Manometer, Manometer-Wahlschalter, elektrische Druckgeber und Druckschalter, können die flexiblen Meßschläuche wie Elektrokabel verlegt werden, so daß eine aufwendige Rohrverlegung entfällt. Mit solchen Meßkupplungen lassen sich daher die effektiven Arbeitsdrücke direkt in der Fluid-Leitung messen, wobei kein Lösen von Entlüftungsschrauben und Rohrverschraubungen erforderlich ist. Solche Kupplungen finden bei den verschiedensten Bauelementen und Regelungen von Fluid-Systemen Verwendung. Nach dem Trennen des Kupplungsanschlusses wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtfunktion übernimmt, für den Fall, daß ein in die Kupplungsbuchse installiertes Rückschlagventil nicht absolut dicht schließt.

Bisher werden die Temperaturen des fluidischen Mediums entweder mit festinstallierten Temperaturfühlern, welche im Flüssigkeitsstrom des Systems liegen, gemessen oder es werden hermetisch dichte Tauchrohre verwendet, in die Temperaturfühler eingebaut sind.

Bei Installationen mit Tauchrohren wird in vielen Fällen wegen der Unkenntnis der meßtechnischen Anforderungen nicht die gewünschte Medientemperatur, sondern die Gehäusetemperatur oder ein von der gewünschten Medientemperatur abweichender und damit fehlerhafter Zwischenwert gemessen.

Aus der DE-B2-26 30 640 ist eine Vorrichtung zur Messung von hohen Drücken und Temperaturen in einem hydraulischen oder pneumatischen System bekannt, welche mit Hilfe einer piezoresistiven Druckmeßzelle und einer elektronischen Schaltung versehen ist und in einem Gehäuse zu einer Baueinheit integriert ist. In einem ölgefüllten Übertragungsmembrangehäuse ist eine Druckmeßzelle untergebracht, wobei die Sockelstifte in über den Umfang verteilte Preßglasführungen des Übertragungsmembrangehäuses eingebettet sind.

Die Druckmeßzelleneinheit ist auf ein Basisscheibchen gekittet, welches einen demgegenüber größeren Durchmesser aufweist. Zur Durchführung der Sockelstifte sind über den Umfang versehene Durchtritte vorgesehen, welche mit denjenigen des Übertragungsmembrangehäuses korrespondieren. Die Sockelstifte führen die elektrischen Kontakte des Sensors aus der Druckmeßzelle heraus zu einer außerhalb des Systems liegenden Elektronik, welche zur Versorgung des Sensorsystems und zur Verstärkung der erzeugten Signale dient. Hierdurch läßt sich kein kompaktes Meßsystem aufbauen, welches durch einfache Schraub- und Meßadapter an ein unter Druck stehendes hydraulisches oder pneumatisches System anschließbar ist.

Insbesondere zur Messung von hohen Drücken und Drücken unter extremen Bedingungen, wie etwa bei hohen Temperaturen, ist es erforderlich Justiervorrichtungen vorzusehen, um in allen Bereichen exakte Messungen vornehmen zu können. Um jedoch eine Justierung des Drucksensors vornehmen zu können und diese auch kontinuierlich während der Messungen aufrechtzuerhalten, ist es erforderlich, die physikalischen Größen zu messen und auszuwerten, welche in unmittelbarer Umgebung des Drucksensors herrschen und welche die Meßgenauigkeit des Drucksensors beeinflussen. Entsprechende Betrachtungen gelten auch für die Messung der Temperatur.

Aus der DE-A-30 00 110 ist eine Sonde zur Temperatur- und Druckmessung bekannt, welche insbesondere für Zwecke der geothermischen Exploration dient. Bei dieser bekannten Ausführung weist jede Sonde getrennte Bohrungen und Durchgänge durch das Sensorgehäuse auf, so daß die Meßpunkte an unterschiedlichen Stellen liegen. Die Temperatursensoren befinden sich in dem mit Bohrungen versehenen Gehäuse, so daß die zu messende Fluidik durch die Bohrungen in das Gehäuse strömen muß. Eine solche Sonde ist für die Durchführung von genauen Messungen mit beispielsweise auch kurzzeitigen Temperaturänderungen in einem fluidischen System ungeeignet, da die Sonde das System stark beeinflußt, so daß nicht die echten Werte gemessen werden.

Ferner besteht der Nachteil dieses Aufbaus auch darin, daß eine Anwendung für Schraub- und Meßadapter an ein unter Druck stehendes System nicht realisierbar ist, da ein mit einer Bohrung versehener Anschlußnippel fehlt, der dem Öffnen dieser Schraub- und Meßadapter dient.

Der vorliegenden Erfindung liegt die Aufgabe zugrunde einen Sensor vorzuschlagen, der an unter Betriebsdruck stehende Rohrleitungen oder Anschlußpunkte anschließbar ist und mit dessen Hilfe es möglich ist, gleichzeitig und kontinuierlich sowohl die Drücke des Systems als auch die Temperaturen und kurzzeitige Temperaturänderungen des fluidischen Mediums zu messen, ohne daß während des Betriebes der Anschluß zum Druckgerät gegen einen Temperaturfühler ausgetauscht werden muß, wie dies bei den bekannten Systemen erforderlich ist.

Die Lösung dieser Aufgabe erfolgt gemäß der Erfindung dadurch, daß mit dem Sensorgehäuse ein mit einer Bohrung versehener Anschlußnippel verbunden ist und durch die Bohrung die in axialer Richtung mittels einer Verstellvorrichtung verstellbare Temperatursonde geführt ist, welche mit dieser einen ringförmigen Strömungskanal bildet, der mit der Drucksensorkammer des Drucksensors fluidisch verbunden ist, wobei das Sensorgehäuse zur Aufnahme des Anschlußnippels einen Anschlußstutzen aufweist, an dessen äußeren Umfang ein Sicherungsring zur Halterung einer Überwurfmutter angeordnet ist.

Durch die Unterbringung von zwei Meßsystemen in einem Sensorgehäuse mit einem Anschluß an das fluidische System ist es nach der Erfindung möglich, zwei physikalisch verschiedene Meßwerte des fluidischen Systems an einer Meßstelle kontinuierlich und gleichzeitig aufzunehmen und voneinander unabhängig in entsprechende elektrische Werte umzuwandeln, wobei die Temperatursonde in das fluidische System, beispielsweise einem Strömungsrohr, unterschiedlich eingreifen kann, da sie in axialer Richtung mittels der Vorstellvorrichtung verstellbar ausgebildet ist.

In spezieller Ausbildung der Erfindung ist die Temperatursonde mit einer gummielastischen Dichtung abgedichtet, welche mit einer Stopfbuchse gegen einen Stützring verspannt ist.

Zur Erzielung einer kompakten Bauweise ist der Drucksensor in vorteilhafter Weise achsparallel zur Temperatursonde angeordnet und durch einen O-Ring gegen das Sensorgehäuse abgedichtet und mittels einer Verschlußschraube mit dem Sensorgehäuse verbunden. Hierdurch wird eine schmale Bauweise erzielt, so daß ein Einbau auch an Orten mit geringem Platzbedarf möglich ist.

Die Drucksensorkammer weist in vorteilhafter Weise eine Entlüftungsvorrichtung auf, welche eine Entlüftungsschraube besitzt, die am Ausgang einer Querbohrung angeordnet ist, welche mit der Drucksensorkammer des Drucksensors fluidisch in Verbindung steht. Aufgrund der Möglichkeit, das System des Drucksensors und des Temperatursensors zu entlüften, werden erhebliche Fehlerquellen ausgeschlossen.

Um eine leichte Demontage des gesamten Systems zu ermöglichen, weist das Sensorgehäuse zur Aufnahme des Anschlußnippels den aufgeführten Anschlußstutzen auf, an dessen äußeren Umfang der genannte Sicherungsring zur Halterung einer Überwurfmutter angeordnet ist.

Vorteilhaft ist hierbei weiter, wenn die Überwurfmutter mit einer Rändelung und einem Kupplungsgewinde versehen ist.

Für die elektrische Verbindung der elektronischen Elemente des Systems weist in Weiterbildung der Erfindung das Sensorgehäuse einen Anschlußstecker auf, der im Gehäuseinnern eine elektrische Kabeldose besitzt, welche über Meßkabel mit dem Temperatursensor und dem Drucksensor elektrisch verbunden sind.

Zur weiteren Verbesserung des Sensors ist der Temperatursensor im Bereich der Spitze der Temperatursonde eingebettet. Im Zusammenhang mit der Möglichkeit, den Temperatursensor in axialer Richtung verstellen zu können, lassen sich die Orte der Temperaturmessung in dem fluidischen System relativ frei wählen, so daß beispielsweise Temperaturmessungen außerhalb einer Randströmung oder eines bekannten Wirbelfeldes im Fluid durchgeführt werden können.

Selbstverständlich ist es auch möglich, gerade diese genannten Strömungsanomalien hinsichtlich ihrer Temperatur zu bestimmen, wobei auch die den Druck aufnehmende Bohrung im Wirkungsbereich des Temperatursensors liegt.

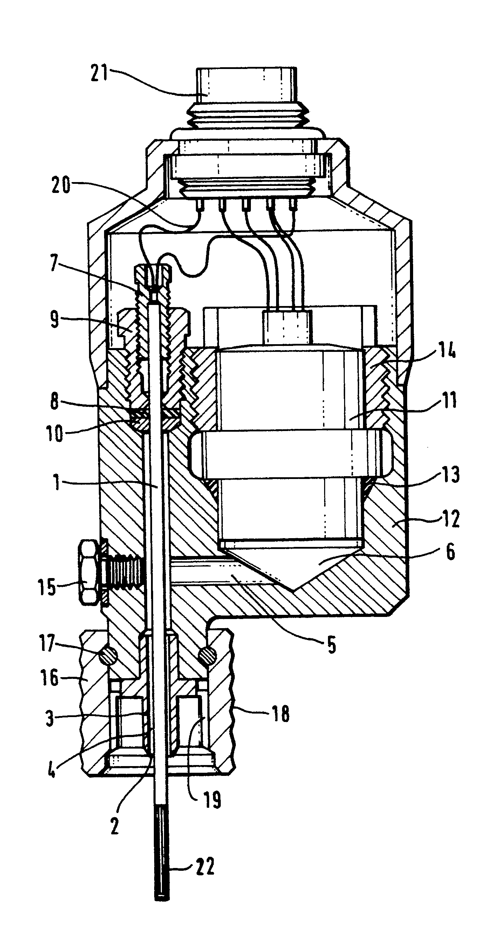

Die Erfindung wird anhand der Figur näher erläutert.

Zur gleichzeitigen Erfassung von Drücken und Temperaturen ist mit dem Sensorgehäuse 12 des Sensors ein mit einer Bohrung 2 versehener Anschlußnippel 3 verbunden. Durch die Bohrung 2 ist die Temperatursonde 1 geführt, welche mit dieser einen ringförmigen Strömungskanal 4 bildet, der mit einer Drucksensorkammer 6 des Drucksensors 11 fluidisch verbunden ist. Der um die Temperatursonde 1 ausgebildete Strömungskanal führt über eine Querbohrung 5 zur Drucksensorkammer 6 des Drucksensors 11.

Die Temperatursonde 1 ist mit einer Verstellvorrichtung 7 versehen und derartig ausgebildet, daß sie in axialer Richtung verstellbar ist. Sie ist ferner mit einer gummielastischen Dichtung 8 abgedichtet, welche mit einer Stopfbuchse 9 gegen einen Stützring 10 verspannt ist.

Der Drucksensor 11 ist achsparallel zur Temperatursonde 1 und unmittelbar neben ihr angeordnet und ist durch einen O-Ring 13 gegen das Sensorgehäuse 12 abgedichtet. Mittels einer Verschlußschraube 14 ist der Drucksensor 11 mit dem Sensorgehäuse 12 verbunden. Für die Entlüftung des Drucksensors 11 weist die Drucksensorkammer 6 eine Entlüftungsvorrichtung auf, welche eine Entlüftungsschraube 15 besitzt, die am Ausgang der Querbohrung 5 angeordnet ist, welche mit der Drucksensorkammer 6 des Drucksensors 11 fluidisch in Verbindung steht.

Das Sensorgehäuse 12 ist zur Aufnahme des Anschlußnippels 3 mit einem Anschlußstutzen versehen, an dessen äußeren Umfang ein Sicherungsring 17 zur Halterung einer Überwurfmutter 16 angeordnet ist.

Diese Überwurfmutter 16 ist mit einer Rändelung 18 und einem Kupplungsgewinde 19 versehen, so daß eine einfache Handhabung gegeben ist.

Zur Sicherstellung der elektrischen Versorgung ist das Sensorgehäuse 12 mit einem Anschlußstecker 21 versehen, der im Gehäuseinnern eine elektrische Kabeldose aufweist, welche über Meßkabel 20 mit dem Temperatursensor 22 und dem Drucksensor 11 elektrisch verbunden ist.

In dem hier dargestellten Ausführungsbeispiel der Erfindung ist der Temperatursensor 22 im Bereich der Spitze der Temperatursonde 1 eingebettet, so daß er das zu messende Fluid direkt und unmittelbar erfaßt.

Somit lassen sich Drücke und Temperaturen gleichzeitig und nahezu am gleichen Ort innerhalb eines fluidischen Systems kontinuierlich messen, ohne irgendwelche Änderungen während der Messung vornehmen zu müssen.

## Patentansprüche

1. Sensor für fluidische Systeme zur kontinuierlichen und gleichzeitigen Erfassung von Arbeitsdrücken und Temperaturen, mit einem Sensorgehäuse zur Aufnahme einer Temperatursonde sowie eines in einer Drucksensorkammer befindlichen Drucksensors und mit im Sensorgehäuse befindlichen Bohrungen und Durchgängen zu den Sonden, **dadurch gekennzeichnet**, daß mit dem Sensorgehäuse (12) ein mit einer Bohrung (2) versehener Anschlußnippel (3) verbunden ist und durch die Bohrung (2) die in axialer Richtung mittels einer Verstellvorrichtung (7) verstellbare Temperatursonde (1) geführt ist, welche mit dieser einen ringförmigen Strömungskanal (4) bildet, der mit der Drucksensorkammer (6) des Drucksensors (11) fluidisch verbunden ist, wobei das Sensorgehäuse (12) zur Aufnahme des Anschlußnippels (3) einen Anschlußstutzen aufweist, an dessen äußeren Umfang ein Sicherungsring (17) zur Halterung einer Überwurfmutter (16) angeordnet ist.

2. Sensor nach Anspruch 1, **dadurch gekennzeichnet**, daß die Temperatursonde (1) mit einer gummielastischen Dichtung (8) abgedichtet ist, welche mit einer Stopfbuchse (9) gegen einen Stützring (10) verspannt ist.

3. Sensor nach Anspruch 1 oder 2, **dadurch gekennzeichnet**, daß der Drucksensor (11) achsparallel zur Temperatursonde (1) angeordnet ist und durch einen O-Ring (13) gegen das Sensorgehäuse (12) abgedichtet und mittels einer Verschlußschraube (14) mit dem Sensorgehäuse (12) verbunden ist.

4. Sensor nach Anspruch 1 oder einem der voranstehenden Ansprüche, **dadurch gekennzeichnet**, daß die Drucksensorkammer (6) eine Entlüftungsvorrichtung aufweist, welche eine Entlüftungsschraube (15) besitzt, die am Ausgang einer Querbohrung (5) angeordnet ist, welche mit der Drucksensorkammer (6) des Drucksensors (11) fluidisch in Verbindung steht.

5. Sensor nach Anspruch 1 oder einem der voranstehenden Ansprüche, **dadurch gekennzeichnet**, daß die Überwurfmutter (16) mit einer Rändelung (18) und einem Kupplungsgewinde (19) versehen ist.

6. Sensor nach Anspruch 1 oder einem der voranstehenden Ansprüche, **dadurch gekennzeichnet**, daß das Sensorgehäuse (12) einen Anschlußstecker (21) aufweist, der im Innern des Sensorgehäuses eine elektrische Kabeldose aufweist, welche über Meßkabel (20) mit dem Temperatursensor (22) und dem Drucksensor (11) elektrisch verbunden ist.

7. Sensor nach Anspruch 1 oder einem der voranstehenden Ansprüche, **dadurch gekennzeichnet**, daß der Temperatursensor (22) im Bereich der Spitze der Temperatursonde (1) eingebettet ist.

## Claims

1. Sensor for fluidic systems for continuously and simultaneously measuring pressures and temperatures, having a sensor chamber for housing a temperature probe and a pressure sensor located within a pressure chamber, said sensor chamber being provided with bores and passages to the probes, characterized in that the sensor chamber (12) is linked with a connection pin (3) having a bore (2), through which a temperature probe (1) adjustable by adjusting means (7) is fed so as to constitute a tubular flow channel (4) which is in fluidic communication with the pressure chamber (6) of the pressure sensor (11), the sensor chamber (12) having a connecting branch for receiving the connection pin (3), with a snap ring (17) being provided at the outer circumference of the branch for retaining a sleeve nut (16).

2. Sensor according to Claim 1, characterized in that the temperature probe (1) is sealed with an elastic rubber seal (8) which is pressed against a support ring (10) by means of a stuffing box (9).

3. Sensor according to Claim 1 or 2, characterised in that the pressure sensor (11) is mounted axially parallel to the temperature probe (1) and is sealed against the sensor housing (12) by means of an O-ring (13) and is connected with the sensor housing (12) by means of a screw plug (14).

4. Sensor according to claim 1 or one of the preceding claims, characterized in that the pressure sensor chamber (6) has a venting device with a venting screw (15), which is attached to the outlet of a transverse bore (5) which is in fluidic communication with the pressure sensor chamber (6) of the pressure sensor (11).

5. Sensor according to Claim 1 or one of the preceding claims, characterized in that the sleeve nut (16) is knurled and provided with a coupling thread (19).

6. Sensor according to Claim 1 or one of the preceding claims, characterized in that the sensor housing (12) has a connector with an electric cable socket at the inside of the sensor housing, which is electrically connected via measuring cables (20) to the temperature sensor (22) and the pressure sensor (11).

7. Sensor according to Claim 1 or one of the preceding claims, characterized in that the temperature sensor (22) is embedded in the tip zone of the temperature probe (1).

**Revendications**

1. Capteur de saisie continue et simultanée des pressions de travail et des températures, pour systèmes de fluides, avec un boîtier de capteur reprenant une sonde de température ainsi qu'un capteur de pression situé dans un logement de capteur de pression, et avec dans le boîtier de capteur des percements et passages vers les sondes, caractérisé en ce qu'un mamelon de raccordement (3) muni d'un trou foré (2) est relié au boîtier (12) de capteur et que la sonde (1) de température, déplaçable axialement au moyen d'un dispositif de déplacement (7), est guidée à travers le trou foré (2), le mamelon de raccordement (3) formant avec le trou foré (2) un canal d'écoulement (4), en liaison pour un fluide avec le logement de capteur de pression (6) du capteur de pression (11), disposition dans laquelle le boîtier de capteur (12) présente un support de raccordement recevant le mamelon de raccordement (3), support au périmètre duquel est disposé un anneau de fixation (17) retenant un manchon d'accouplement (16).

2. Capteur selon la revendication 1, caractérisé en ce que l'étanchéité de la sonde de température (1) est réalisée au moyen d'un joint d'étanchéité (8) élastique en caoutchouc, comprimé contre un anneau de support (10) par une douille (9) de fermeture.

3. Capteur selon la revendication 1 ou la revendication 2, caractérisé en ce que le capteur de pression (11) est disposé avec son axe parallèle à la sonde de température (1), son étanchéité vis-à-vis du boîtier de capteur (12) étant assurée au moyen d'un joint torique (13), et est fixé au boîtier de capteur (12) au moyen d'un bouchon fileté (14).

4. Capteur selon la revendication 1 ou l'une quelconque des revendications précédentes, caractérisé en ce que le logement de capteur de pression (6) présente un dispositif de purge d'air contenant un écrou de purge d'air (15) disposé à la sortie d'un trou latéral foré (5), ce dernier étant en liaison pour un fluide avec le logement de capteur de pression (6) du capteur de pression (11).

5. Capteur selon la revendication 1 ou l'une quelconque des revendications précédentes, caractérisé en ce que le manchon d'accouplement (16) est pourvu d'un molettage (18) et d'un filetage (19) d'accouplement.

6. Capteur selon la revendication 1 ou l'une quelconque des revendications précédentes, caractérisé en ce que le boîtier de capteur (12) présente une fiche de raccordement (21) qui présente à l'intérieur du boîtier de capteur une boîte de connexion électrique, électriquement reliée au capteur de température (22) et au capteur de pression (11) par l'intermédiaire de câbles de mesure (20).

7. Capteur selon la revendication 1 ou l'une quelconque des revendications précédentes, caractérisé en ce que le capteur de température (22) est logé dans la zone de l'extrémité de la sonde de température (1).

EP 0 205 789 B1